**Europäisches Patentamt**

**European Patent Office**

**Office européen des brevets**

(19)

(11) Veröffentlichungsnummer: **0 005 437**
**B1**

(12)

# EUROPÄISCHE PATENTSCHRIFT

(45) Veröffentlichungstag der Patentschrift:
**01.04.81**

(21) Anmeldenummer: **79100854.3**

(22) Anmeldetag: **21.03.79**

(51) Int. Cl.³: **B 60 R 1/08**

(54) **Winkelspiegel.**

(30) Priorität: **19.05.78 DE 7815094 U**

(43) Veröffentlichungstag der Anmeldung:
**28.11.79 Patentblatt 79/24**

(45) Bekanntmachung des Hinweises auf die Patenterteilung:
**01.04.81 Patentblatt 81/13**

(84) Benannte Vertragsstaaten:
**BE DE FR GB IT NL SE**

(56) Entgegenhaltungen:
**DE-U-7 505 496**
**DE-U-1 921 384**
**DE-A-1 923 372**
**US-A-2 514 989**
**US-A-2 705 904**

(73) Patentinhaber: **Hagus C. Luchtenberg GmbH & Co. KG,
Wiesenstrasse 8-10, D-5650 Solingen-Wald (DE)**

(72) Erfinder: *Luchtenberg, Curt, Sonnenschein 41,
D-5650 Solingen-Wald (DE)*

(74) Vertreter: **Selting, Günther, Dipl.-Ing. et al,
Deichmannhaus am Hauptbahnhof, D-5000 Köln 1 (DE)**

Winkelspiegel

Die Erfindung betrifft einen Winkelspiegel mit einem rückseitig mit Spiegelbelag beschichteten einstückigen Spiegelglas mit zwei relativ zueinander schräggestellten Spiegelflächen, die von einem gemeinsamen Rahmen umgeben sind.

Als Aussenspiegel von Fahrzeugen sind Winkelspiegel bekannt, die eine bessere Erfassung des toten Winkels ermöglichen (DE-U-1 921 384, US-A-2 514 989). Der Winkelspiegel besteht aus einer ebenen oder leicht gekrümmten Spiegelfläche, an die eine schräggestellte Spiegelfläche, die auch konvex gekrümmt sein kann, angrenzt. Die beiden Spiegelflächen stossen entlang einer Stosslinie gegeneinander und sind gemeinsam von einem Rahmen oder Gehäuse umgeben.

Ferner sind Winkelspiegel bekannt, die aus einem einzigen Glas bestehen und bei denen die gewölbten Spiegelflächen stossfrei ineinander übergehen (DE-U-7 505 494, DE-A-1 923 372). Derartige Winkelspiegel rufen Verzerrungen hervor, die eine Orientierung anhand des im Spiegel sichtbaren Bildes erschweren, so dass für den Fahrer nicht ohne weiteres erkennbar ist, wo sich ein Gegenstand oder ein Fahrzeug, das er im Rückspiegel sieht, in Wirklichkeit befindet.

Der Erfindung liegt die Aufgabe zugrunde, einen einstückigen Winkelspiegel der eingangs genannten Art zu schaffen, der ohne Trennungsstrebe zwischen den Spiegelflächen dem Fahrer eine klare Unterscheidung der Spiegelbilder von beiden Spiegelflächen ermöglicht.

Zur Lösung dieser Aufgabe ist erfindungsgemäss vorgesehen, dass die Spiegelflächen durch einen von Spiegelbelag freien Strich voneinander getrennt sind.

Dadurch entsteht eine deutlich sichtbare bzw. markierte Linie, die dem Fahrer die Begrenzung der jeweiligen Spiegelfläche bzw. die Grenzlinie zwischen den Spiegelflächen angibt. Der Fahrer des Fahrzeugs sieht also sofort, ob ein anderes Fahrzeug, das er im Rückspiegel sieht, in der normalen Spiegelfläche auftaucht, die plan oder nur ganz leicht gewölbt ist, oder ob er dieses Fahrzeug in dem Aussenteil des Spiegels erblickt, der einen Teil des Bereichs seitlich neben dem Fahrzeug erfasst. Diese Unterscheidungsmöglichkeit stellt eine wirksame Orientierungshilfe für den Fahrer dar. Da die Trennungslinie vor dem Spiegel keinerlei Konstruktionselemente erfordert, besteht auch nicht die Gefahr von Beschädigungen solcher Teile.

Eine zusätzliche Möglichkeit der optischen Trennung der beiden unmittelbar aneinander angrenzenden Spiegelflächen besteht darin, beiden Spiegelflächen eine unterschiedliche Tönung zu geben. So kann beispielsweise die grössere Hauptspiegelfläche aus einem Blautonglas und die kleinere Seitenfläche aus einem Silbertonglas bestehen.

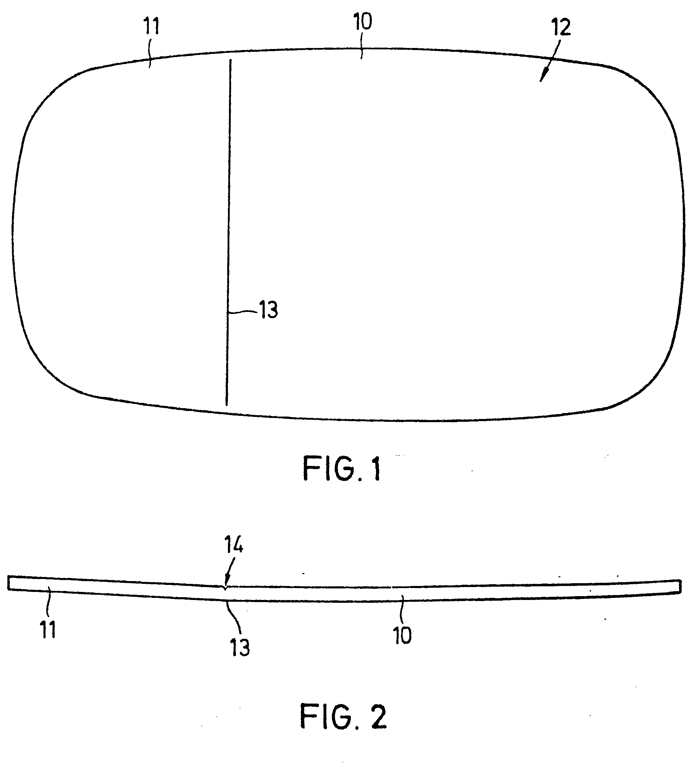

Im folgenden wird unter Bezugnahme auf die Zeichnungen ein Ausführungsbeispiel der Erfindung näher erläutert. Figuren 1 und 2 zeigen das Spiegelglas eines Winkelspiegels in Ansicht und in Draufsicht.

Bei dem dargestellten Ausführungsbeispiel ist eine einzige durchgehende Glasscheibe 12 vorgesehen, die aus den beiden Spiegelflächen 10 und 11 besteht. Die Stärke der Glasscheibe beträgt beispielsweise 3 mm. Die Spiegelfläche 10 bildet die Hauptspiegelfläche. Sie ist geringfügig konkav gekrümmt, um eine Vergrösserung zu bewirken, kann aber auch vollständig plan sein.

Die dem Fahrzeug abgewandte kleinere Spiegelfläche 11 ist ebenfalls konvex gekrümmt, um mit ihr einen möglichst grossen Winkelbereich zu erfassen. Beide Spiegelflächen 10, 11 gehen über eine Knicklinie 13 ineinander über. Diese Knicklinie ist in der Darstellung von Figur 2 schwer zu erkennen, weil der Winkel, den beide Spiegelflächen 10, 11 relativ zueinander einnehmen, ziemlich klein ist, jedoch ist bei der praktischen Ausführung des Spiegelglases wegen der Spiegelwirkung die Knicklinie 13 klar zu erkennen. Um diese Knicklinie noch deutlicher vorzunehmen und dem Fahrer anzuzeigen, wo die eine Spiegelfläche endet und die andere beginnt, befindet sich hinter der Knicklinie 13 ein schmaler Streifen oder eine Linie, wo der Spiegelbelag entfernt ist. Der Streifen 14 ist vorzugsweise 0,5 mm und maximal 1 mm breit. Ggf. kann der an dieser Stelle entfernte Spiegelbelag durch eine farbige Linie ersetzt werden, indem der belagfreie Streifen 14 mit einem Farbmaterial ausgefüllt wird.

**Ansprüche**

1. Winkelspiegel mit einem rückseitig mit Spiegelbelag beschichteten einstückigen Spiegelglas mit zwei relativ zueinander schräggestellten Spiegelflächen, die von einem gemeinsamen Rahmen umgeben sind, dadurch gekennzeichnet, dass die Spiegelflächen (10, 11) durch einen von Spiegelbelag freien Strich (14) voneinander getrennt sind.

2. Winkelspiegel nach Anspruch 1, dadurch gekennzeichnet, dass die beiden Spiegelflächen (10, 11) unterschiedliche Tönung aufweisen.

**Revendications**

1 – Miroir angulaire comportant un verre à miroir monobloc à revêtement réfléchissant, présentant deux surfaces réfléchissantes d'orientations distinctes montées dans un cadre unique, caractérisé par le fait que les surfaces réfléchissantes (10, 11) sont séparées l'une de l'autre par une ligne (14) sans revêtement réfléchissant.

2 – Miroir selon la revendication 1, caractérisé par le fait que les deux surfaces réfléchissantes (10, 11) présentent des teintes différentes.

**Patent claims**

1. Angle mirror comprising a mirror glass of one piece coated on the rear side with a mirror coating and having two mirror surfaces in inclined position relative to each other which are surrounded by one common frame, characterized in that the mirror surfaces (10, 11) are separated from each other by a line (14) free of mirror coating.

2. Angle mirror according to claim 1, characterized in that the two mirror surfaces (10, 11) have a shading different from one another.

FIG. 1

FIG. 2